# EUROPEAN PATENT APPLICATION

(11) **EP 1 223 523 A2**
(43) Date of publication of application: **17.07.2002**
(21) Application number: 01307790.4
(22) Date of filing: 13.09.2001
(51) Int. Cl.: G06F 17/60

(54) **Content package order receiving and production system**

(30) Priority: 10.01.2001 JP 2001002160
(71) Applicant: Nippon Columbia Co., Ltd., Tokyo 107-8011 (JP)
(72) Inventor: Sugiura, Go, Machida-shi, Tokyo 195-0061 (JP); Kita, Sadao, Hachiouji, Tokyo 192-0364 (JP); Haruna, Tsutomu, Tokyo 142-0063 (JP)
(74) Representative: Hackney, Nigel John

(57) **Abstract**

An on-demand type content package order receiving system or reproduction system is provided. The content package order receiving system or reproduction system is that a user can easily obtain a merchandise which is difficult to obtain, a selling shop can sell all catalog merchandises to increase the sale, and a maker of the merchandises can effectively use the assets by the revival of small rot merchandises and reducing of the stock risk.

An on-demand type content package order receiving system in accordance with the present invention comprises a catalog server which receives information of a present status at least on whether each of various kinds of content packages is in stock, out of stock or a discarded package from a database storing the information, and receives information on present statuses of an amount of purchase orders, an estimated selling time and an estimated selling price for each of the content packages from an order receiving management system, and stores the various kinds of content package information in a form of catalog in the catalog server, wherein the catalog server transmits the various kinds of content package information to a terminal of a purchase order site to display the various kinds of content package information on the terminal in the form of catalog.

## Description

### BACKGROUND OF THE INVENTION

### Field of the Invention

The present invention relates to a content package order receiving and/or a content package order receiving and production (reproduction) system for a package merchandise such as an optical disk, a memory or the like which records contents such as music, images, game and so on.

### Prior Art

In a mail-order system using the Internet for package merchandises such as music, movies, game and so on, when a mail-order shop receives a purchase order of a merchandise from a user, the merchandise in stock of the mail-order shop is delivered to an address specified by the user using a physical distributing means such as a truck for distribution. If the merchandise does not exist in the stock of the mail-order shop, the mail-order shop places an order to a manufacturer. When the manufacturer receives the order, the manufacturer checks its stock. If there is the merchandise in the stock, the merchandise is shipped to be delivered to the mail-order shop. In regard to the merchandise not exist in the stock, the mail-order shop places an order for the merchandise to the manufacturer by adding a mark meaning not-yet-shipping (usually, a mark B) to the end of a merchandise number. In a factory, when number of not-yet-shipped merchandises of one kind reaches a certain value, the merchandises are manufactured and stored in a storehouse. The stored merchandises are shipped to be delivered to the mail-order shop, and the mail-order shop sends the merchandise to the address specified by the user.
① In general, after receiving an order the mail-order shop delivers a merchandise in the stock of the mail-order shop, or orders the merchandise from the manufacturer to sent the address specified by the user when the merchandise is not in the stock of the mail-order shop. In this system, both of the mail-order shop and the manufacturer must keep the merchandises in the stock in advance, and must have burden of fund for the stock and risk for the stock if the merchandises are not sold. Further, it is a general rule that both of the mail-order shop and the manufacturer do not have stock of merchandises which have a low past sale, merchandises which are out of production at present because several years has elapsed after the starting date of selling, or merchandises of which number of packages which have been produced is limited.
② The merchandise ordered from the mail-order shop to the manufacturer can be shipped when the manufacturer has the merchandise in the stock, but the manufacturer has to produce the merchandise when the merchandise is not in the stock. However, if the merchandises are produced every time when a small number of orders are received, the production cost becomes high to lose profitability. Therefore, in general, the manufacturer does not start to produce the merchandises until number of orders reaches to a certain number which is balanced with the production cost. In this reason, the users have to wait until the production is started (the users do not know how long they have to be kept waiting), or the users can not obtain the merchandises because the manufacturer does not produce the merchandises of which the number of orders does not reach the certain number which is balanced with the production cost. Accordingly, business chance of the mail-order shop and the manufacturer is reduced by that amount.
③ Otherwise, since the shop has to seek the business efficiency, well-sold merchandises are mainly displayed in the center of the shop, and not-well-sold merchandises are driven to a corner of the shop or not stocked in the shop. In the business of contents such as music, images and the like, the well-sold merchandises are merchandises for young people. Therefore, articles for young people are mainly stocked and displayed in the shop. On the other hand, it is sometimes difficult or completely impossible to obtain merchandises for people of middle and old age and valuable and scarce works of art, science, history and education. This tendency also appears in the net mail-order selling. For example, in a case of CD mail-order selling in a net mail-order shop, there are some merchandises ordered by a user which are presented in a catalog but not on production at present. There may be some users who want to purchase these merchandises even if it takes a somewhat longer time to deliver the merchandise or even if the price is somewhat higher. This tendency can be easily estimated from the fact that a work having a scarcity value is bought and sold at a high price in at a net auction at present. However, because of the economical system of efficiency supremacy, there are some cases where the user can not obtain the merchandise because such a work is not produced.

### SUMMARY OF THE INVENTION

In order to solve the above-described problem, an object of the present invention is to provide a content package order receiving system or a production system including the order receiving system that a user can easily obtain a merchandise which is difficult to obtain, a selling shop can sell all catalog merchandises to increase the sale, and a manufacturer of the merchandises can effectively use the assets by the revival of small rot merchandises and reducing of the stock risk.

A system in accordance with the present invention comprises ① a client terminal connected to the Internet and a purchase order site (a purchase order server) operated by a record shop or the like; and ② an automatic order receiving system having a catalog server and an order receiving management system (an order receiving management server) linked to the purchase order site. Further, the system in accordance with the present invention may be added with ③ an automatic production system for producing CD-R packages to which content data such as music is recorded by an instruction from the automatic order receiving system.

A novel and important constituent element in the present system is ② the automatic order receiving system. The automatic order receiving system stores catalog data with respect to merchandises which are stopped to be produced in the past or which are difficult to be obtained because of a small amount production (for example, CDs which have been discarded, CDs which have been limited in number of productions and have not been produced at present, and so on). By providing the catalog data to the purchase order site (the purchase order server) operated by the records shop, a user can purchase the merchandise which has been difficult to be obtained in the past (as a CD-R suitable for small amount production, and not as a CD through molding production).

The present system of the automatic order receiving system provides users with the merchandises at a regular price when number of orders reaches a number which is balanced with the production cost of the CD-R. When number of orders does not reach the number which is balanced with the production cost of the CD-R, the automatic order receiving system notifies the purchase order site that the merchandises can not be supplied to the users until the number of orders reaches the certain number of disks, and notifies of the estimated waiting time. On the other hand, the automatic order receiving system notifies the purchase order site of a spot purchase price (a price which is added with an amount of money being balanced with a production cost for a small amount production) because there are some users who want to purchase the merchandises at once even if they pay much money. By doing so, the users can make a choice between purchasing the merchandise at the low price by waiting until the number of orders reaches the certain number of disks and purchasing the merchandise at once even by paying much money.

Furthermore, when purchase orders above a certain number (for example, 100 disks) are received at a time, the present system of the automatic order receiving and producing system can switch the production process so as to produce the merchandises through the molding production process because the production cost is lower in the CD production through the molding process (ordinary CD production process) than in the production by the CD-R.

### BRIEF DESCRIPTION OF DRAWINGS

FIG. 1 is a block diagram showing an embodiment of a content package order receiving system in accordance with the present invention.
FIG. 2 is a block diagram showing an embodiment of a content package production system in accordance with the present invention.
FIG. 3 is a view showing an embodiment of a display by a catalog server.
FIG. 4 is a view showing an embodiment of a waiting list.
FIG. 5 is a table showing a configuration of each system.
FIG. 6A and 6B are a flowchart showing the flow from receipt of orders to shipping of content packages.
FIG. 7 is a flowchart showing processing of a catalog server.
FIG. 8 is a flowchart showing processing of an order receiving management system.
FIG. 9 is a flowchart showing processing of a job management system.

### DESCRIPTION OF THE PREFERRED EMBODIMENTS

Embodiment of the present invention will be described below referring to the accompanied drawings.

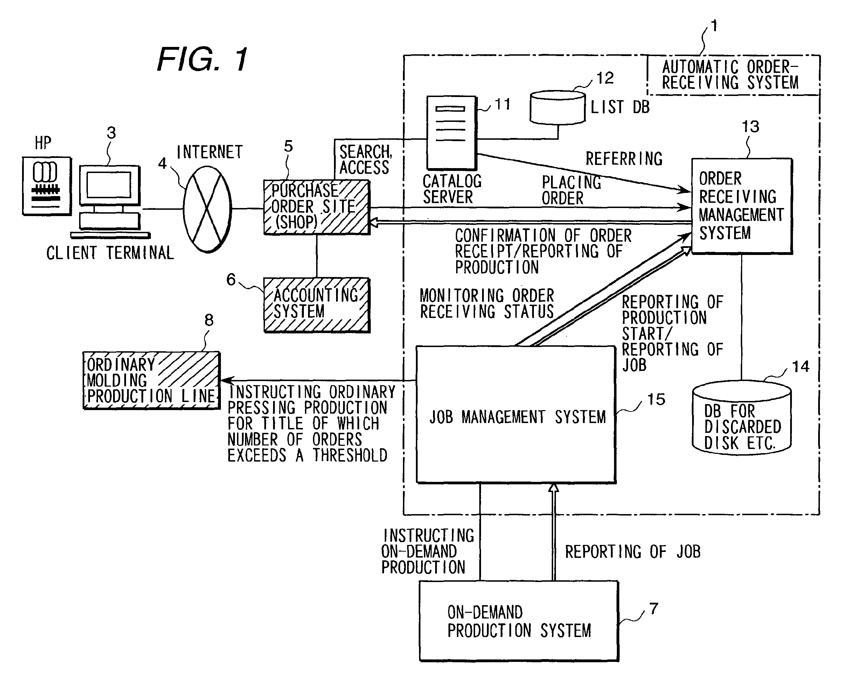

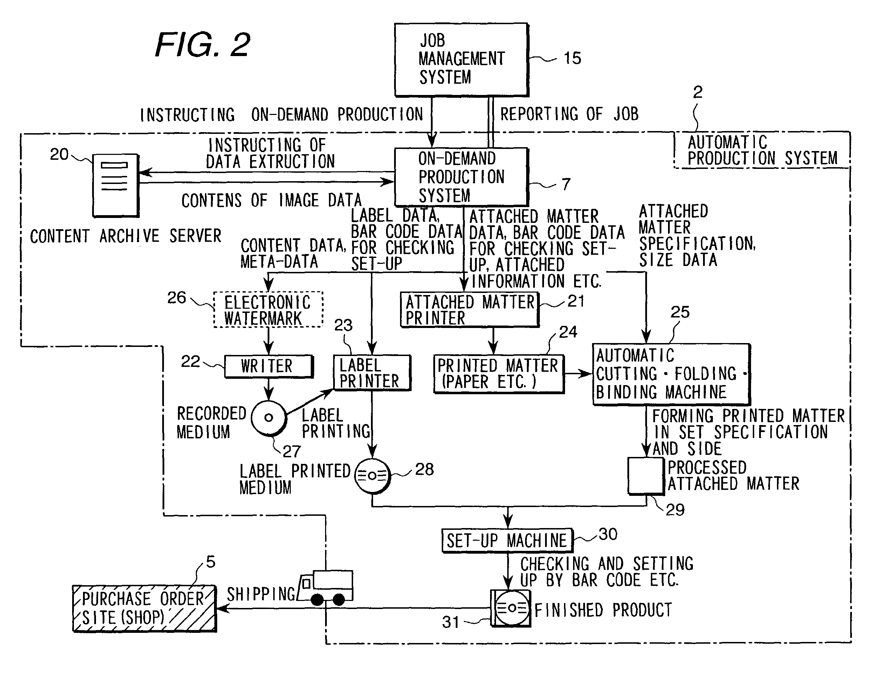

FIG. 1 shows a content package order receiving system which is an embodiment of the content order receiving system. FIG. 2 shows a content package producing system in relating to the content package order receiving system. A block diagram of a content package order receiving and producing system can be obtained by combining FIG. 1 and FIG. 2.

Although the present invention provides an optimum embodiment by applying the present invention to an on-demand type content package order receiving system, it is not limited the enbocliment. The on-demand type content package order receiving system and a production system including the on-demand type content package order receiving system will be described below.

Referring to FIG. 1, a user gets access to a catalog server 11 of the automatic order receiving system 1 from a client terminal (PC, Cellular, PHS, television set or the like) 3 through a purchase order site 5 on the Internet 4, and selects the user's favorite title from a merchandise list on Web to place an order for the merchandise to the purchase order site 5, and the purchase order site 5 sends out the order to an order receiving management system 13 of the automatic order receiving system 1.

The catalog server 11 reads data in regard to titles out of stock and titles of discarded disks (data for discarded packages) from a list DB (Data Base) 12 to automatically generate a title list on Web. This list is a catalog merchandise list of titles which can not be profitably supplied as a CD, a DVD or the like through the ordinary molding production process, but which can be supplied if the user accepts supply of a medium in an on-demand production process (hereinafter, referred to as "the present process") such as a CD-R, a DVD-R (a write-once CD, a write-once DVD) and if number of purchase orders exceeds a number of ordered disks necessary for the profitable production calculated based on the production cost (hereinafter, referred to as "a set number of disks").

Disks having a title of which number of orders in an order receiving management system 13 reaches the set number of disks is started production in the present process.

In regard to disks having a title of which number of orders does not reach the set number of disks yet, number of disks short for the production for each title and prices on the bases of number of ordered disks calculated based on the production cost for the users who want to purchase by spot purchasing (hereinafter, referred to as "spot purchase price") are displayed on the catalog server 11. The catalog server automatically generates a waiting list and discloses the waiting list.

The users can make a choice between waiting until the number of orders reaches the set number of disks and purchasing the merchandise at once at a spot purchase price without waiting. The catalog server 11 refers the order receiving management system 13 and the result of the status of receipt of orders until number of orders reaches the set number of disks is disclosed to the individual user on Web in a form of a waiting list.

The order receiving management system 13 executes processing of receiving of order from the purchase order site 5 to accumulate and update the order receiving data. In addition, the order receiving management system 13 refers data of the list DB 12 for discarded disks etc. to monitor the status of receipt of orders in regard to titles of discarded disks.

A job management system 15 monitors the status of receipt of orders of the order receiving management system 13, and in regard to disks having a title of which number of received orders in the purchase order data reaches the set number of disks or a disk having a title for which the user places an order at a spot purchase price, the job management system 15 outputs an instruction of the production to an on-demand production system 7. Further, by presetting a value (hereinafter, referred to as "a threshold value") of number of ordered disks above which the disks can be produced through the ordinary molding production process with a low cost (about 100 ordered disks at minimum), the job management system 15 outputs an instruction to the ordinary molding production line 8 to produce disks having a title of which number of orders exceeds the threshold value. On the other hand, the job management system 15 sends a production start report to the order receiving management system 13.

As described above, the job management system 15 is a system controlling the job of the automatic production system 2 (FIG. 2), and generates a job schedule and performing management of the next process.

As shown in FIG. 2, the on-demand production system 7 having received the instruction of production extracts content image data corresponding to the instruction from a content archive sever 20. The content archive server 20 is an archive server storing package image data of contents. In the content image data, various kinds of data necessary for production such as content data, meta-data, label data, attached matter data, attached matter specification data, reference bar code data are archived in a file. Therefore, the data is transmitted individually to a writer 22, a label printer 23, an attached matter printer 21 and a cutting-folding-binding machine 25 to produce the merchandises. Printed matters are formed by the attached matter printer 21, and then transferred to the cutting-folding-binding machine 25. In the writer 22, before writing data in a write-once optical disk, combination of a right holder and an order receipt number for making a distribution rout identifiable and a music identifier (ISRC or the like) are embedded into the content data as an electronic watermark 26.

Data is written into a medium to form a recorded medium 27 by the writer 22, and the recorded medium 27 is transferred to the label printer 23. In the label printer 23, a label is printed on the recorded medium27 to be formed into the label-printed medium 28.

In the automatic cutting-folding-binding machine 25, a printed attached matter is processed into set specification and size to be formed into the processed attached matter 29. The label-printed medium 28 and the processed attached matter 29 are transferred to a setup machine 30 to form a finished product 31 through checking and setting-up using a bar code or the like. The finished product 31 is shipped to the purchase order site (shop) 5.

Function of each of the parts will be described below. Initially, the constituent elements and the functions of the automatic order receiving system 1 will be described.

### (1) The catalog server 11

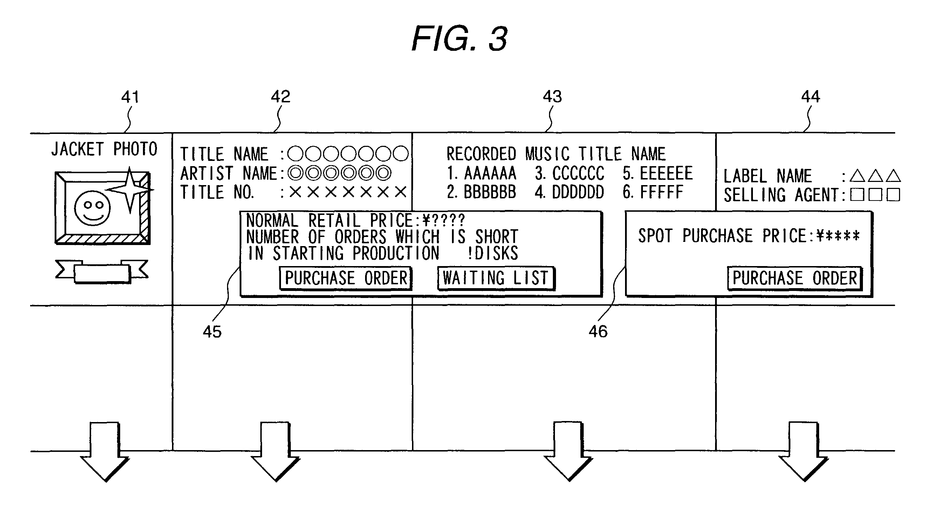

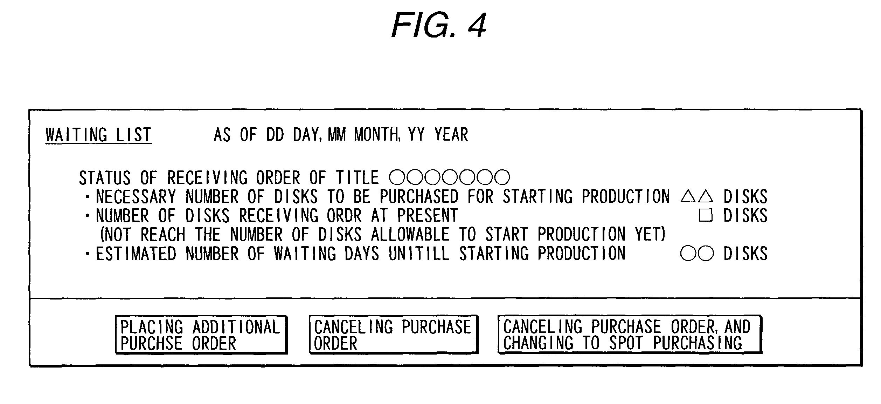

The catalog server 11 is a database server storing catalog data (music title names, artist names, lyric writer names and composer names, selling agent names and maker names, and so on) in regard to music of catalog merchandise titles. A web page of the purchase order site 5 can freely use the catalog data, and a user can search the user's favorite music among the catalog data on the home page of the purchase order site 5. A list of catalog merchandise titles is automatically generated from a list DB 12, and displays a normal retail price and a spot purchase price (refer to FIG. 3). In regard to a title of which number of orders is short of the set number of disks, a waiting list for the title is additionally formed on Web (refer to FIG. 4), and the address is sent to the client terminal 13. The user can check the waiting list any time by opening the home page of the address. The waiting list corresponding to the status of receipt of orders is updated by periodically referring the order receiving management system 13.

FIG. 3 shows an embodiment of a display in the form of catalog by the catalog server 11. A jacket photograph 41, a title name, an artist name and a title number 42, recorded music title name 43, a label name and a selling agent 44, a normal retail price 45, a spot purchase price 46 are displayed here. This shows what is called a merchandise catalog and an explanation of business operation.

The catalog server 11 stores image information showing the contents of content packages such as jacket photographs, illustration pictures and the like; title information including title names and artist names; recorded music information; selling agent information including label names and selling agents; and selling timing and price information including estimated selling timing and selling prices (including on-demand). These kinds of information are transmitted to the terminal of the purchase order site 5 to be displayed.

FIG. 4 shows an embodiment of a waiting list. As shown in the figure, a status of receiving order of title ooooo as of DD day, MM month, YY year is shown by necessary number of disks to be purchased for starting production, number of disks receiving order at present, estimated number of waiting days until starting production.

### (2) The list DB 12

The list DB 12 is a database formed by copying parts necessary for the above-mentioned catalog merchandise title among the DB for discarded disks etc.

### (3) The order receiving management system 13

The order receiving management system 13 is a system which manages various kinds of order receiving information (data of order receiving, number of received order, title name, number of orders, distribution route and so on) from the purchase order site 5, and returns an order receiving confirmation information to each purchase order site, and stores and updates order receiving data.

### (4) The DB for discarded disks etc. 14

The DB for discarded disks etc. 14 is a database for titles of discarded disks and titles of which number of orders is short of the ordinary molding production.

### (5) The job management system 15

The job management system 15 manages the job of the automatic production system 2, and generates a job schedule using number of disks received order as the parameter, and manages the next process. The job schedule means a schedule automatically prepared in order to efficiently operate the on-demand production system 7. For example, when a plurality of orders for disks having the same title are independently received, it is inefficient to instruct data extraction every time of receiving the order. However, the efficiency can be improved by a method that the data is extracted once by making out a schedule. The job management system 15 monitors the status of order receiving of the order receiving management system 13, and outputs to the on-demand production system 7 an instruction of starting to producing disks having a title of which number of orders of the purchase order data reaches the set number of disks, and at the same time, always manages a report from the on-demand production system 7. Further, by presetting a value (a threshold value) of number of ordered disks above which the disks can be produced through the ordinary molding production process with a low cost, the job management system 15 outputs an instruction to the ordinary molding production line 8 to produce disks having a title of which number of orders exceeds the threshold value.

As described above, it is possible to provide the on-demand type content package order receiving system (for example, the automatic order receiving system 1) comprising the job management system 15 which instructs production of content packages and an amount of the producing content packages, and receives a report of job expressing an amount of the produced content packages, and monitors a status of job; and an order receiving management system 13 which receives a purchase order through the terminal of the purchase order site 5 for receiving purchase orders of the content packages, and receives a report of production from the job management system 15, and gets access to a database (for example, DB for discarded disks 14) for storing data of discarded package merchandises such as discarded disks, which further comprises the catalog server 11 which receives information of a present status at least on whether each of the content packages is in stock, out of stock or a discarded package from a database (for example, the list DB 12) storing the information, and receives information on present statuses of an amount of purchase orders, an estimated selling time and an estimated selling price for each of the content packages from the order receiving management system 13, and stores the information in a form of catalog in the catalog server, wherein the catalog server 11 transmits and displays the information on each of the content packages to and on the terminal of the purchase order site 5.

The stored various kinds of content package information may include spot purchase prices on the bases of number of ordered disks.

In addition, the stored various kinds of content package information may include a present status of receiving orders and an estimated status of receiving orders until a set status for starting production.

The constituent elements of the automatic production system 2 and the functions will be described below.

### (6) The on-demand production system 7

By receiving a production instruction from the job management system15, the on-demand production system 7 extract a designated image data from the content archive server 20. The image data is classified into content data and meta-data (the meta-data is data for searching music or checking the contents, and is composed of label name, title name, title number, music title name, recorded time, artist name, composer name, lyric writer name, merchandise management ID, phonetic symbols for searching, and so on); label data and bar code data for setup checking (when a label printed medium 28 transferred from the label printer 23 and a processed attached matter transferred from the automatic cutting-folding-binding machine 25 are assembled using the setup machine 30, the bar code data is used for checking that they should be contained into a single package together.); attached matter data and the bar code data for setup checking (the same as above); and an attached matter specification and size data, and then transmits the above classified data sets to the writer 22, the label printer 23, the attached matter printer 21 and the automatic cutting-folding-binding machine 25, respectively.

### (7) The content archive server 20

At producing packages of a new music title, the content archive server 20 archives content data, meta-data, label data, attached matter data, attached matter specification and size data, setup checking bar code data and so on for each title into a file as a content image data, and the content image data is successively stored. When the on-demand production system 7 outputs an instruction of extracting data, the content archive server 20 extracts content image data corresponding to the data.

### (8) The writer 22

The writer 22 embeds a combination of an order receipt number and a music identifier (ISRC (an abbreviation of International Standard Recording Code, and an unique ID code for identifying audio recording and audio-visual recording through an internationally common digital means: an excerpt from a material of the Japan Record Association) and etc.) into content data transferred from the archive content server 20 as an electronic watermark 26, and records the electronic watermark into a medium such as a CD-R, a DVD-R or the like, and then transfers the medium to the label printer 23. The electronic watermark 26 can identify right-holder information and a distribution route in a case of occurrence of illegal copying. For example, by forming an order receiving number by combining an order series number; order receipt date; a title number; a purchase order site (shop) code; number of disks; and so on and by further combining the order receiving number with the ISRC of the identification code of right management information, the right-holder information and the distribution route can be traced.

### (9) The label printer 23

The label printer 23 receives the recorded medium 27 having the content data and meta-data recorded by the writer 22, and prints the label data transferred from the content archive server 20 onto a disk surface or a portion of the medium where the data is not recorded, and then transfers the medium to the setup machine 30.

### (10) The attached matter printer 21

The attached matter printer 21 prints the attached matter data and the setup checking bar code data transmitted from the content archive server 20 on a sheet of paper (the printed matter 24), and transfers the printed matter24 to the automatic cutting-folding-binding machine 25.

### (11) The automatic cutting-folding-binding machine 25

The automatic cutting-folding-binding machine 25 processes the printed matter 24 transferred from the attached matter printer 21 to an attached matter having the specification and the size transmitted from the on-demand production system 7 (the processed attached matter 29), and then transfers the processed attached matter 29 to the setup machine 30.

### (12) The setup machine 30

The setup machine 30 checks the label-printed medium 28 transferred from the label printer 23 and the processed attached matter 29 transferred from the automatic cutting-folding-binding machine 25 using the bar code data preprinted by the content archive server 20, and sets up the label printed medium 28 and the processed attached matter 29 into a P-case, and then forming a finished product 31 by shrink-packaging the P-case.

As described above, the present invention proposes an on-demand type content package order receiving and producing system comprising a job management system 15 which instructs production of content packages and an amount of the producing content packages, and receives a report of job expressing an amount of the produced content packages, and monitors a status of job; an order receiving management system 13 which receives a purchase order through a terminal of a purchase order site 5 for receiving purchase orders of the content packages, and receives a report of production from the job management system 15, and gets access to a database for storing data of discarded package merchandises such as discarded disks; and a production system, an example of which is the automatic production system 2, for performing production based on the instruction of production from the job management system 15, wherein the content package order receiving and producing system further comprises the catalog server 11 which receives at least information of a present status on whether each of the various kinds of content packages is in stock, out of stock or a discarded package from a database storing the information, and stores information on present statuses of an amount of purchase orders, an estimated selling time and an estimated selling price depending on the amount of purchase orders for each of the content packages from the order receiving management system 13, and the catalog server 11 transmits the various kinds of content package information to the terminal of the purchase order site 5 to displays the content package information on the terminal in the form of catalog, and the order receiving management system 13 instructs the job management system 15 on a production timing of packages which is determined and input for each of the content packages.

Further, the present invention proposes a content package order receiving and producing system, wherein the job management system 15 instructs the above-mentioned automatic production system 2 to start production of write-once optical disks when the job management system 15 receives from the order receiving management system 13 an instruction that number of disks which have been ordered reaches a set number of disks or that a spot purchase is placed.

Furthermore, the present invention proposes a content package order receiving and producing system, wherein the job management system 15 instructs the above-mentioned automatic production system 2 to start molding production of read-only optical disks and does not instruct to start production of write-once optical disks when the job management system receives from the order receiving management system 13 an instruction that number of disks which have been ordered reaches a threshold value of the number of ordered disks.

Menu constructions of the client terminal and the functions will be described below.

### 1) Merchandise list menu (in the case of music contents)

The merchandise list menu (refer to FIG. 3) is capable of searching a database composed of list name, title number, music title name, artist name, conductor name, composer name, lyric writer name, label name, genre, jacket photograph of each merchandise.

### 2) Payment procedure menu

The payment procedure menu is the one by which a method of payment is selected, and private information such as address, name, telephone number, credit card number, bank account number and so on is input, and the method of payment is checked and settled.

### 3) Delivery procedure menu

The delivery procedure menu is the one by which address, name, telephone number for delivery and appointed time and date for delivery are input and checked and settled.

### 4) Totally checking screen

The totally checking screen uses a screen by which in the end of the procedures, all the items are totally checked, and the purchase order is finalized.

The present system is an on-demand production system automated throughout the processes from placing of an order to producing of the merchandise. The feature of the system is that there is no need to store stock extraneous for the process because the production is started after receiving the order, and accordingly the maker is released from stock risk and can immediately cope with a need from a purchase order side because the merchandise is stored in the database as the content image data.

The purchase order side can obtain contents having scarcity value such as a discarded disk, a rare disk or the like which have been difficult to be obtained. In addition, by introducing the concept of "spot purchase price" to merchandises of a small number of orders which are unprofitable, a course that the users can obtain the merchandises is found.

The method of placing a purchase order by a user is as follows.

The user gets access to a mail order site from a user terminal, and searches a merchandise list to select the user's favorite title among the list and to push a button for purchasing. As the user selects purchasing, the user terminal is linked to an accounting server to start the payment procedure. The payment procedure is normally executed in order of selection of a payment method; input of the user's private information such as address, name, telephone number, credit card number, bank account number and so on; search of the user's solvency (making an inquiry to a database of a settling organization); settlement of the payment. After completion of the payment procedure, the delivery procedure such as inputting of an address, a name, a telephone number, appointed date and time for delivery is executed, and finally the total check is executed to fix the user's purchase order. (Since the delivery is performed by deliver the merchandise from the purchase order site (shop) to the user, the order receiving system does not control the delivery procedure.)

The method of placing order of the purchase order site is as follows.

After fixing the purchase order of the user, the purchase order site 5 transmits the order receiving information to the order receiving management system13 of the maker. The action of the order is completed by receiving the order receiving confirmation information from the order receiving management system 13.

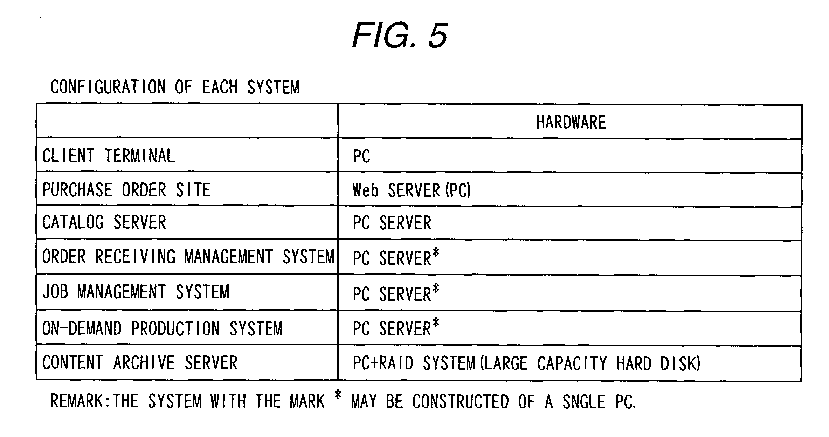

FIG. 5 shows a constitution of each system.

The client terminal 3 is constructed of a personal computer (PC). The purchase order site 5 is constructed of a Web server. Each of the catalog server 11, the order receiving management system 13, the job management system 15 and the on-demand production system 7 is constructed of a PC server 20 storing an individual control program. The content archive server is constructed of a control PC and a large capacity hard disk (RAID system) storing the content image data.

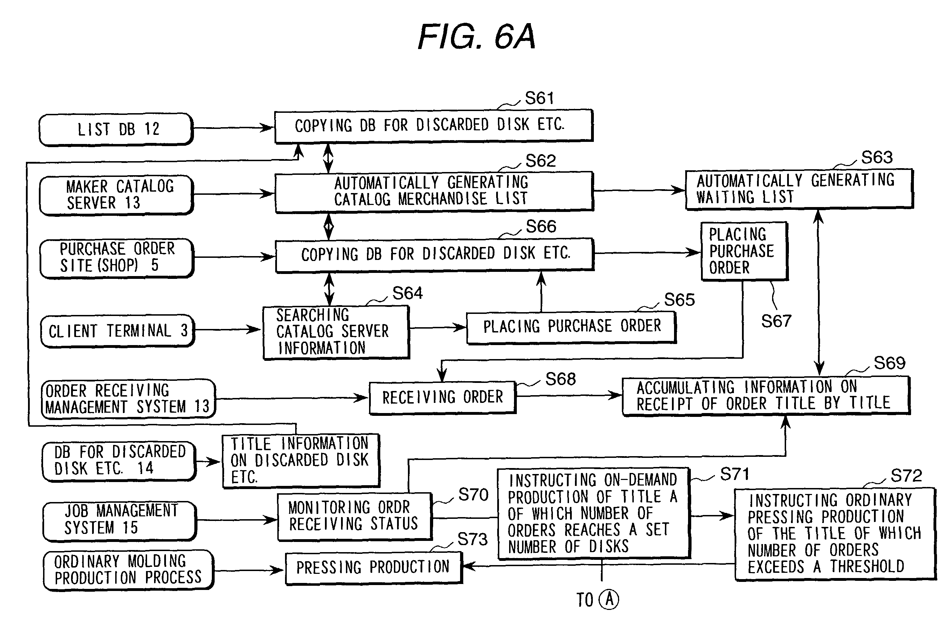

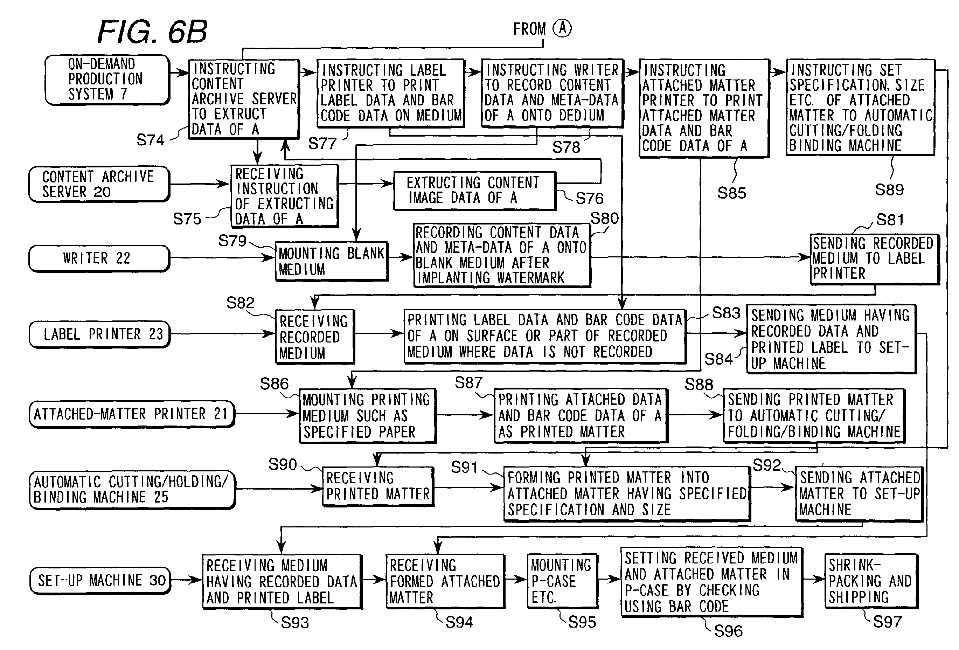

FIG. 6A and 6B show the flow (flowchart) from receipt of orders to shipping of content packages.

The list DB 12 updates data by copying title information on discarded disks etc. from the DB for discarded disks etc 14. through the order receiving management system 13 (S61).

The catalog server 11 automatically generates a catalog merchandise list by referring the list DB 12 and displays the catalog merchandise list on the purchase order site 5 (S62). Further, the catalog server 11 automatically generates a waiting list and displays the waiting list on the purchase order site 5 (S63).

The client terminal 3 is connected to the purchase order site 5, and searches and refers the catalog merchandise list and the waiting list (S64) to place a purchase order of title A which the user wants to purchase (S65).

The purchase order site 5 settles account for the order received title (S66), and transmits order receiving information expressing receiving an order to the order receiving management system 13 (S67). When the order receiving management system 13 receives the order receiving information (S68), the order receiving management system 13 accumulates the order receiving information on the title bases and updates the waiting list of the catalog server (S69).

The job management system 15 is monitoring the status of received orders by referring to the order receiving information in the order receiving management system 13 (S70), and instructs the production system to product CD-Rs of a title (assuming as title A) of which number of orders reaches a set number of disks (S71).

Further, the job management system 15 instructs to start molding production (production of CDs) of a title of which number of disks exceeds the threshold (S72). The CDs having the title instructed to be produced through the molding production are produced at a CD manufacturing factory (S73).

When the on-demand production system 7 receives the instruction of on-demand production of the title A from the job management system 15, the on-demand production system instruct the content archive server 20 to extract the content image data of the title A (S74).

When the content archive server 20 receives the information instructing extraction of the content image data of the title A from the on-demand production system 7 (S75), the content archive server 20 extract the content image data of the title A and transmits the content image data to the on-demand production system 7(S76).

As the on-demand production system 7 receives the content image data of the title A (S74), the on-demand production system 7 transmits information expressing an instruction of printing label data and bar code data in the content image data of the title A on the medium (CD-R) to the label printer 23 (S77), and at the same time transmits information expressing an instruction of recording content data and meta-data in the content image data of the title A on the medium (CD-R) to the writer 22 (S78).

As the writer 22 receives the information expressing the instruction of recording the content data and the meta-data from the on-demand production system 7, the writer 22 sets a not-yet-recorded CD-R (blank medium) (S79) to embed an electronic watermark 26 for preventing copying into the content data and to record the content data and the meta-data into the CD-R (S80). The writer 22 transfers the recorded CD-R (recorded medium 27) to the label printer 23 (S81).

The label printer 23 receives the CD-R (recorded medium 27) from the writer 22 (S82). When the label printer receives the information expressing the instruction of printing the label data and the bar code data onto the title A on the recorded medium 27 (CD-R) from the on-demand production system 7, the label printer prints the label data and the bar code data of the title A onto the surface or a portion where the content data is not recorded (S83). The label printer 23 transfers the CD-R (label-printed medium 28), to which the content data and the meta-data are recorded and the label data and the bar code data are printed, to the setup machine 30 (S84).

The on-demand production system 7 transmits information expressing instruction of printing attached matter data and the bar code data among the content image data of the title A to the attached matter printer 21 (S85).

As the attached matter printer 21 receives the information expressing instruction of printing the attached matter data and the bar code data from the on-demand production system 7, the attached matter printer 21 sets a specified paper sheet (S86) to print the attached matter data and the bar code data onto the paper sheet (S87).

The attached matter printer 21 transfers the paper sheet having the attached matter data and the bar code data printed to the automatic cutting-folding-binding machine 25 (S88).

The on-demand production system 7 transmits information expressing instruction of set specification and size of the attached matter to the automatic cutting-folding-binding machine 25 (S89).

As the automatic cutting-folding-binding machine 25 receives the information expressing instruction of set specification and size of the attached matter from the on-demand production system 7 and receives the paper sheet (printed matter) having the attached matter data and the bar code data printed from the attached matter printer 21 (S90), the automatic cutting-folding-binding machine 25 processes the printed matter into an attached matter having the set specification and size (S91) and then transfers the processed attached matter 29 to the setup machine 30 (S92).

As the setup machine 30 receives the CD-R (label-printed medium 28) from the label printer 23 (S93) and receives the processed attached matter 29 from the automatic cutting-folding-binding machine 25 (S94), the setup machine 30 sets a P case (S95). After the setup machine 30 compares the bar code printed on the received CD-R (label-printed medium 28) with the bar code printed on the processed attached matter 29 to check that the both are for the title A, the setup machine 30 sets the CD-R (label-printed medium 28) and the processed attached matter 29 into the P case (S96). Then, the P case is shrink-packaged (packed with a vinyl sheet) and is shipped (S97).

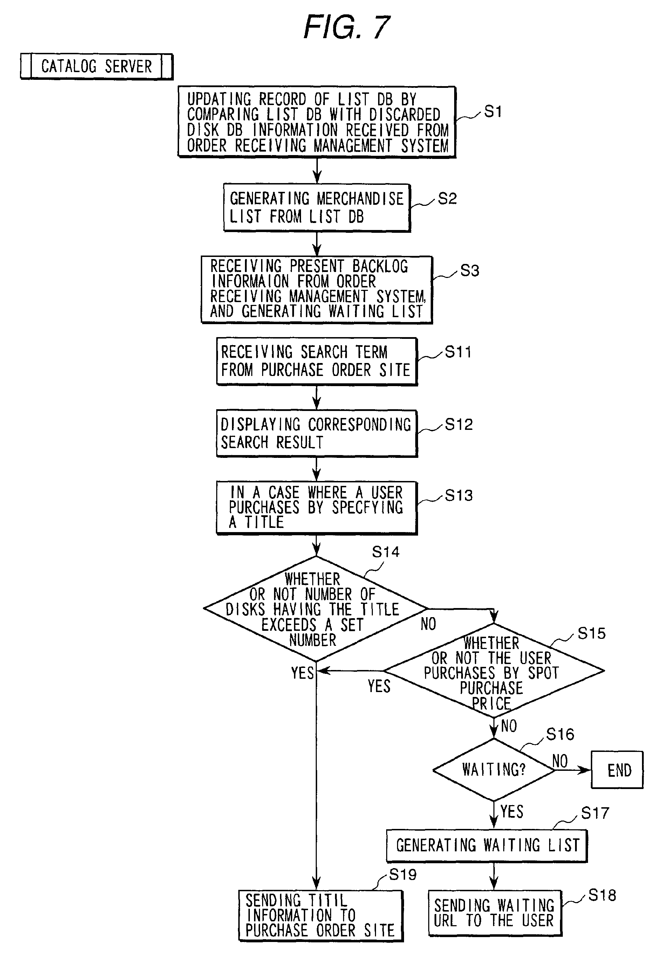

FIG. 7 shows the processing of the catalog server 11 using a flowchart. Referring to the flowchart, the catalog server 11 receives discarded disk DB information from the order receiving management system 13, and updates the record of the list DB by comparing the discarded disk DB 12 information with the list DB 12 (S1). The merchandise list is generated by the list DB 12 (S2), and the catalog server 11 generates the waiting list by receiving information on not-yet-shipped disks at present from the order receiving management system 13 (S3). The catalog server 11 receives a search term from the purchase order site 5 (S11), and displays the corresponding search result (S12). In a case where the user wants to purchase by specifying a title (S13), it is judged whether or not the number of disks having the title exceeds a set number of disks (S14). If NO, it is judged whether or not the user purchases the disk at a spot price purchase (S15). If NO, it is judged whether or not the user waits (S16). If NO, the processing is ended. If YES, a waiting list is generated (S17) and the waiting URL is sent to the user (S18). If YES in Step 14 or Step 15, the title information is transmitted to the purchase order site (S19).

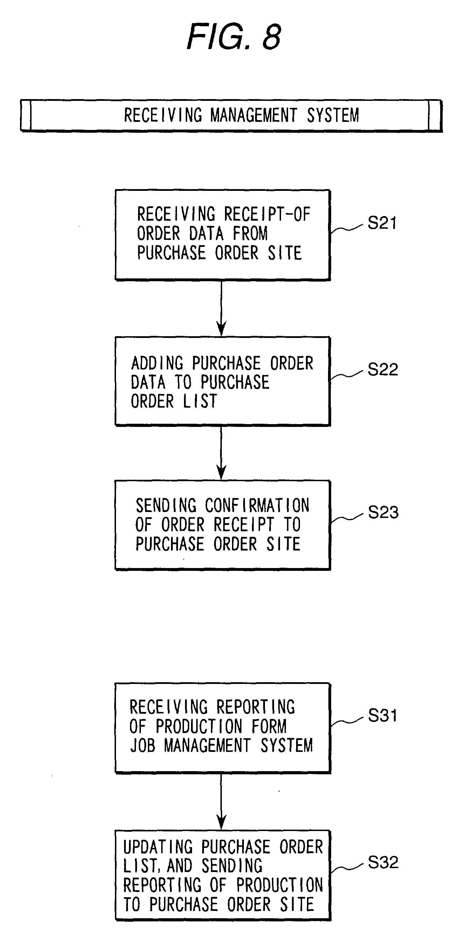

FIG. 8 shows the processing of the order receiving management system 13 using a flowchart. Referring to the flowchart, the order receiving management system 13 receives order receiving data from the purchase order site 5 (S21), and adds the purchase order data to the purchase order list (S22), and transmits the order receiving confirmation information to the purchase order site 5 (S23).

The order receiving management system 13 receives a production report from the job management system 15 (S31), and updates the purchase order list and transmits the production report to the purchase order site 5 (S32).

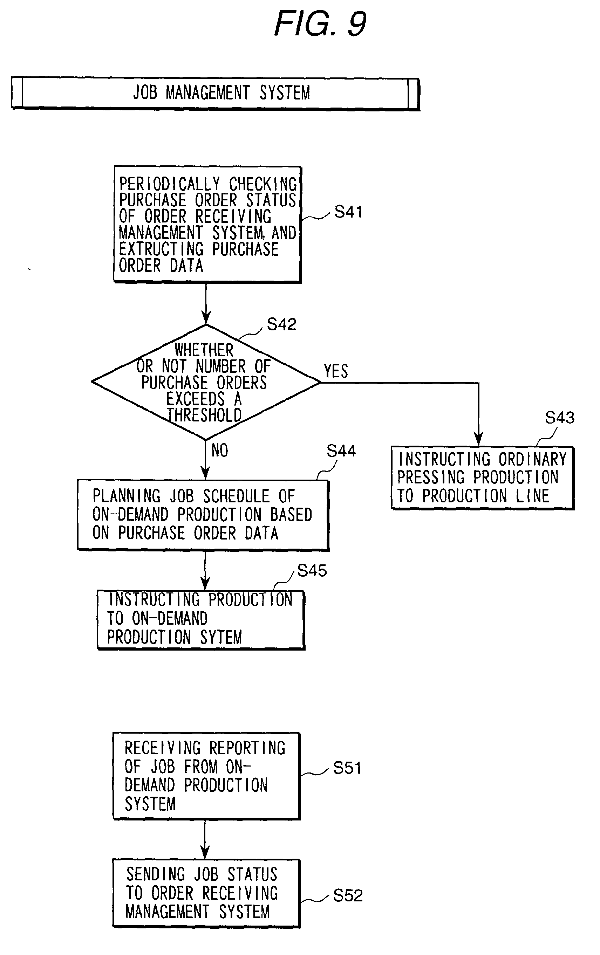

FIG. 9 shows the processing of the job management system 15 using a flowchart. Referring to the flowchart, the job management system 15 periodically checks the status of order receiving of the order receiving management system 13, and extracts the purchase order data (S41), and judges whether or not number of orders exceeds the threshold (S42). If YES, the job management system 15 instructs the ordinary molding production line 8 to produce disks by the ordinary molding process (S43). IF NO, the job management system 15 generates a job schedule of the on-demand production system 7 based on the purchase order data (S44), and outputs an instruction of production to the on-demand production system 7 (S45).

The job management system 15 receives a report of job from the on-demand production system 7 (S51), and transmits information expressing the status of job to the order receiving management system 13 (S52).

According to the present invention, it is possible to perform order receiving and selling of disks by unit of several disks through the on-demand process that the disks are produced and delivered after receiving of orders by album title unit of content package merchandises such as CDs which have been stopped to be produced or sold out. In the market, there are needs of re-selling of content packages which will be rarely re-produced in the future or have been sold out. According to some search results, 40 to 50 % of catalog merchandises are not on the market. In order to increase sale, it is important and at the same time possible for makers and vendors of content package merchandises to explore the needs for the sold-out merchandises. As described above, it is possible to provide a content package order receiving system or a content package producing system that the users can easily obtain the merchandises which have been difficult to be obtained, and that the selling shops can sell all the catalog merchandises to increase sale, and that the makers can effectively use the capital assets by revival of small rot merchandises and small stock risk.

## Claims

1. A content package order receiving system comprising a job management system (15) for instructing production of content packages and receiving a report of job expressing an amount of the produced content packages and monitoring a status of job; and an order receiving management system (13) for receiving a purchase order through a terminal of a purchase order site and receiving a report of production from the job management system and getting access to a database of discontinued package merchandise such as discarded disks, which further comprises
a catalog server which receives at least information of a present status on whether each of the content packages is in stock, out of stock or a discontinued package from a database storing the information, and receives information on present statuses of an amount of purchase orders, an estimated selling time and an estimated selling price for each of the content packages from said order receiving management system, and stores the information in the catalog server, wherein
said catalog server transmits and displays said information on each of the content packages to and on said terminal of said purchase order site.

2. The content package order receiving system according to claim 1, wherein said information on each of the content packages includes a title.

3. The content package order receiving system according to claim 1, wherein said information on each of the content packages includes a price by spot purchasing which relates to number of the content packages which have been ordered.

4. The content package order receiving system according to claim 1, wherein said information on each of the content packages includes a present status of receipt of order and an estimated status of receipt of order until a set status of restarting production.

5. The content package order receiving system according to claim 1 further comprising
a catalog server which stores image information expressing contents of the content package such as a jacket photograph; title information including a title name and an artist name; recorded music information; selling-agent information including a label name and a selling agent name; and selling-time-and-price information including an estimated selling time and an estimated selling price, wherein
said catalog server transmits and displays said image information; said title information; said recorded music information; said selling agent information; and said selling-time-and-price information on each of the content packages to and on said terminal of said purchase order site.

6. The content package order receiving system according to claim 1 further comprising a catalog server which receives various kinds of content package information composed of selling-time-and-price information including present statuses of an amount of purchase orders, an estimated selling time and an estimated selling price; image information expressing contents of the content package such as a jacket photograph; title information including a title name and an artist name; recorded music information; and selling-agent information including a label name and a selling agent name of each of the content packages from said order receiving management system, and stores said information in the catalog server.

7. The content package order receiving system according to claim 1 further comprising a production system for performing production based on the instruction of production from said job management system, wherein
said order receiving management system transmits to said job management system the information expressing a production timing of packages determined for each of the content packages.

8. The content package order receiving and production system according to claim 7, wherein said job management system instructs said production system to start production of write-once optical disks when said job management system receives from said order receiving management system an instruction that number of disks which have been ordered reaches a set number of disks or that a spot purchase is placed.

9. The content package order receiving and production system according to any one of claim 7 and claim 8, wherein
said job management system instructs said production system to start molding production of read-only optical disks but does not instruct to start production of write-once optical disks when said job management system receives from said order receiving system an instruction that number of disks which have been ordered reaches predetermined threshold value.
